# EUROPEAN PATENT SPECIFICATION

(11) **EP 3 254 921 B1**
(45) Date of publication and mention of the grant of the patent: **10.03.2021**
(21) Application number: 17175359.3
(22) Date of filing: 09.06.2017
(51) Int. Cl.: B61B 12/02

(54) **SHOE FOR A CABLE TRANSPORTATION SYSTEM WITH AT LEAST ONE CARRYING CABLE**
SCHUH FÜR EIN SEILTRANSPORTSYSTEM MIT MINDESTENS EINEM TRAGSEIL
SABOT DESTINÉ À UN SYSTÈME DE TRANSPORT PAR CÂBLE AVEC AU MOINS UN CÂBLE PORTEUR

(30) Priority: 09.06.2016 IT UA20164237
(43) Date of publication of application: 13.12.2017
(73) Proprietor: LEITNER S.p.A., Vipiteno (BZ) (IT)
(72) Inventor: WIESER, Hartmut, 39040 RACINES (IT)
(74) Representative: Martini, Gabriele

(56) References cited:
- CH-A- 244 754
- GB-A- 397 359
- US-A- 3 037 465

## Description

The present invention relates to a shoe for a cable transportation system with at least one carrying cable.

The present invention also relates to a cable transportation system with at least one carrying cable provided with the abovementioned shoe.

A cable transportation system as indicated above usually comprises at least one transportation unit, for example a cabin, movable on cables between a downstream loading and unloading station and an upstream loading and unloading station.

In particular, each transportation unit is supported by a trolley provided with rollers which, when the trolley is in motion, roll on the carrying cable. The drive for the transportation unit may be transmitted by means of a traction cable, or the transportation units may be provided with respective motors powered, for example, by batteries.

For various reasons, in these types of systems it is often necessary to support the carrying cable at intermediate areas between the downstream and upstream loading and unloading stations.

For example, the distance between the downstream and upstream loading and unloading stations may be too large to permit arrangement of the carrying cable in a single span. In other cases, it is instead the altitude profile of the cable transportation system's route which requires gradient changes for the carrying cable. In other cases, the plan profile of the cable transportation system's route may require at least one curve. In all these cases, as well as in others not listed, the cable transportation systems comprise one or more intermediate supports, each of which comprises a vertical support structure, such as for example a pylon or a tower, which at its top is provided with a support for the cables known in the field by the term "shoe".

In particular, the shoe has an upper supporting end for the carrying cable. If the transportation unit is moved by means of a traction cable, the latter is supported at the shoe by a series of rollers arranged below the upper end.

As already mentioned above, a cable transportation system of the type according to the present invention comprises at least one trolley, from which the transportation unit is suspended, which is selectively clamped to the traction cable in automatic clamping devices or is attached in a fixed manner to the traction cable. The trolley comprises at least one roller which, in use, rolls on the carrying cable and is provided with a groove suitable to house at least a portion of the carrying cable.

When the trolley must transit the shoe, i.e. the support located at the top of the pillars between the upstream and downstream loading and unloading stations, the traction cable, when present, is raised from the rollers in the shoe and thus transmits to the trolley a downward traction force. In detail, this downward traction force is determined by the lifting induced in the traction cable from the series of shoe rollers and is offloaded from the trolley onto the carrying cable through its own rollers.

Since the carrying cable is formed from metal wires and a possible crushing could result in damage to the cable, it is known to make a seat at the shoe in which to house and protect the carrying cable.

In particular, the seat of the shoe has a depth such that the passing trolley rollers do not weigh on the cable but rest along the outer lanes at the upper ends of the sides of the seat.

In detail, the carrying cable inserted into the shoe protrudes from the upper edge of the seat for a length less than the depth of the central groove with respect to the side tracks of the trolley rollers.

When the carrying cable is in the seat of the shoe, thus free from any load being applied onto it by the trolley, the carrying cable is free to make small longitudinal sliding movements and vertical oscillations thus compensating for variable load conditions and temperature differences in operation of the system.

As previously mentioned, even when the carrying cable is housed in the seat of the shoe at least a portion of it protrudes upwardly beyond the limit of the seat and is therefore, at least for this portion, exposed to external atmospheric conditions such as, for example, wind.

Lateral wind can consequently cause a horizontal displacement of the carrying cables.

The wind force is now only partly opposed by the seats of the carrying cables on the shoes but, if a critical wind threshold is exceeded, the stability of the carrying cables on the guides can no longer be guaranteed, with consequent danger of derailment.

US3037465 discloses a carriage travelling on a cable, wherein the carriage comprises wheels and retaining rolls supporting an inverted U-shaped carrier suitable for limiting the upward displacement of the cable.

An objective of the present invention, based on this known technique, is to provide a cable transportation system with at least one carrying cable which is free from the aforesaid drawback.

In particular, an objective of the present invention is to provide a shoe which is capable of avoiding, or at least reducing, the occurrence of derailment of the carrying cable due to strong crosswinds.

In accordance with the present invention, a shoe for a cable transportation system having the features of claim 1 is provided.

The carrying cable is thus for a short section housed inside a tunnel and, even when there are crosswinds, the cable is locally retained and maintained inside the seat preventing in advance the possible onset of derailment occurrences.

In particular, the seat of the shoe comprises at least one open section upstream of the section closed by the cover.

The rolling transit on the cable on the sides of the seat of the shoe thus occurs in a gradual manner without requiring a sharp deviation towards the bottom of the carrying cable on approaching the shoe.

In particular, the radius of curvature of the shoe remains unchanged at the transition between the open section and the closed section. For example, the upper faces of the sides of the seat at the transition from the open section to the closed section have the same profile and the same height as the base.

The transportation unit suspended under the trolley passing over the shoe thus does not perceive the passage between one section and another section of the seat.

According to the invention, the base of the closed section of the seat of the shoe has holes.

Ventilation and drainage holes are thus created under the cover, which might otherwise locally retain water or other external contaminants in the seat.

In particular, the base of the closed section of the seat is integral with the base of the open section while the sides and the cover of the second section of the seat are integral with, and selectively removable from, the base.

It is thus possible to carry out periodic inspections of the carrying cable even in the closed section of the seat.

In particular, the carrying cable is free to move inside the closed section of the seat where there is a gap between the carrying cable and the inner wall of the cover.

The carrying cable can thus slide freely in the longitudinal direction, complying with normal operational deviations.

In particular, the seat of the shoe further comprises an open section downstream of the closed section, wherein this open downstream section is configured in a manner similar to the open upstream section to avoid shape discontinuity at the transition between the closed section and the open section. The path from upstream to downstream follows the motion of the trolley supporting the transportation unit.

The transition between the closed section and the open section is thus also not perceived in the transportation unit suspended under the trolley.

In particular, the trolley rollers configured to roll on the carrying cable comprise a central rolling track on the carrying cable and two side rolling tracks on the upper faces of the sides of the seat of the shoe. Both the carrying cable in the open section and the cover of the closed section of the seat protrude with respect to the upper faces of the sides of the seat for a length less than the depth of the central track with respect to the two side rolling tracks.

This thus ensures that, during the transit of the rollers on the open section and on the closed section of the seat, the rollers do not weigh on either the cable or the cover.

Further characteristics and advantages of the present invention will become apparent from the following description of a non-limiting example of an embodiment, with reference to the figures of the accompanying drawings, wherein:
- Figure 1 is a partial schematic view of an example of a cable transportation system with at least one carrying cable at the entrance with a shoe supporting the cables;
- Figure 2 is a partially exploded schematic view of a shoe according to the present invention for a transportation system as shown in Figure 1;
- Figure 3 is a vertical cross-section view of a first section of the seat of the shoe shown in Figure 2;
- Figure 4 is a vertical cross-section view of a second section of the seat of the shoe shown in Figure 2;
- Figure 5 is a vertical cross-section view of a roller of a trolley of the cable transportation system transiting an open section of the seat shown in Figure 2; and
- Figure 6 is a vertical cross-section view of a roller of a trolley of the cable transportation system transiting a closed section of the seat shown in Figure 2.

In the figures, a cable transportation system with at least one carrying cable and one traction cable according to the present invention is indicated with the reference number 3 and the shoe for housing the carrying cable according to the present invention is indicated with the reference number 1.

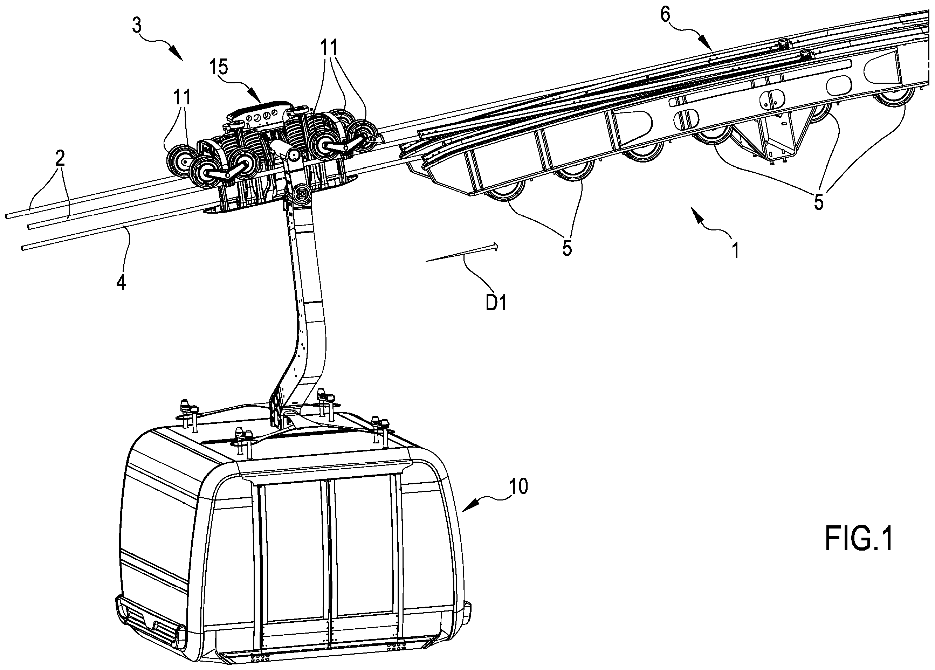

In Figure 1, a cable transportation system comprising a transportation unit, two carrying cables, and a traction cable is shown.
However, for the purposes of the present invention the system comprises at least one carrying cable, there can be two or more transportation units, and the traction cable can be replaced by similar means suitable to effect the movement of the transportation unit.
With reference to the above, in the continuation of the description, reference is made to one carrying cable, although there may be two or more, to one transportation unit, although in this case there may be two or more, and to the traction cable, although this element may be replaced without impact on the invention by similar means suitable to control movement of the transportation unit along the carrying cable.
The system thus comprises at least one carrying cable 2, one traction cable 4, and at least one trolley 15 coupled so that it may slide on the carrying cable 2 and attached, for example clamped, to the traction cable 4 so that it may advance along the direction D1.

In the following description reference will be made to one carrying cable 2 and to the respective seat 7 of the shoe 1, but for the purposes of the present invention each additional carrying cable may be housed in a respective seat 7.

The trolley 15 is attached to a transportation unit 10, for example a cabin or a chair, and during movement along the carrying cables 2 induced by the traction cable 4 it transits on a support structure for the cables known as the shoe 1. This shoe 1, only part of which is shown in Figure 1 and which may also have a considerable length in the order of tens of metres, is arranged on top of vertical support structures not shown in the figures, for example pylons.

As shown in Figure 1, the carrying cable 2 is housed at the upper end 6 of the shoe 1 while the traction cable 4 is housed along a series of rollers 5 placed at a lower height.

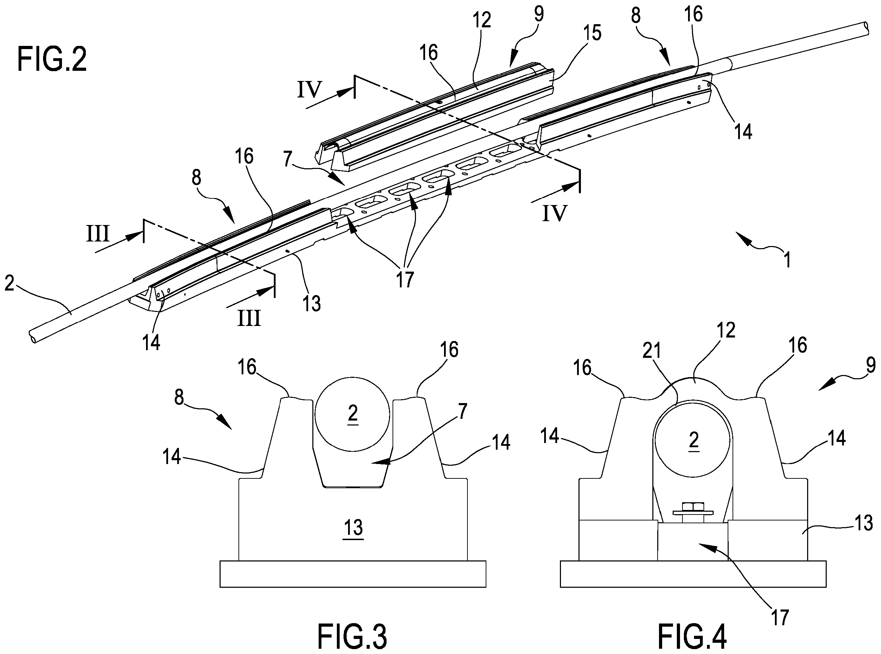

As is known, the shoe 1 comprises a seat 7 for housing the carrying cable 2 at the upper end 6 of the shoe 1. In particular, the seat 7 comprises a base 13 and lateral sides 14 so as to define, as shown in Figure 3, a housing with U section for the carrying cable 2. Also as known, when the carrying cable 2 is housed in the seat 7 of the shoe 1, the carrying cable 2 protrudes from the upper end 16 of the sides 14 for a length less than that which separates the groove or central track 18 from the side tracks 19 of the rollers 11 of the trolley of the system 3.

In other words, as shown in Figure 4, when the carrying cable 2 is housed in the seat 7 of the shoe 1, the rollers 11 do not weigh on the carrying cable 2 but on the shoe 1, thus avoiding transmission of the extra load to the carrying cable 2 due to the raising of the traction cable 4 by the rollers 5.

In particular, as shown in Figure 2, the shoe 1 according to the present invention comprises a cover 12 closing above at least one section 9 of the seat 7 so as to form a closed section 9 for housing a tunnel for the carrying cable 2.

The closed section 9 of the seat 7 of the shoe 1 provided with the cover 12 may, as will be explained hereinafter, be installed without problems as the next or intermediate element of the known sections 8 of the seat 7 of the shoe 1 open above.

Preferably, the seat 7 of the shoe 1 may comprise at least one open section 8 upstream of the closed section 9 closed by the cover 12.

Still more preferably, the seat 7 of the shoe 1 may comprise at least one further open section 8 downstream of the closed section 9 closed by the cover 12.

During passage between the open section 8 and the closed section 9 of the seat 7 of the shoe 1, the carrying cable 2 is progressively pushed downwards in such a way that at the transition from the open section 8 to the closed section 9 the radius of the shoe remains unchanged. The term radius of the shoe means the profile of the seat which projects more for the rolling of the rollers that, according to the invention, coincides in both the open sections 8 and the closed sections 9 with the profile of the upper faces 16 of the sides 14.

As shown in Figure 2, at least the base 13 of the closed section 9 of the seat 7 has holes 17 so as also to provide ventilation and drainage at the cover 12.

As shown in Figure 2, the base 13 of the closed section 9 of the seat 7 may be integral with the base 13 of the open section 8, while the sides 16 and the cover 12 of the closed section 9 may be integral with, and selectively removable from, the base 13.

The cover 12, which preferably has an arched cross-section, may have a variable thickness along the development of the closed section 9 of the seat 7.

Also in the closed section 9, the carrying cable 2 is free to move inside the seat 7 so as to comply with the normal operational displacements or expansions of the system 3. As shown in Figure 4, there is a gap 21 between the carrying cable 2 and the inner surface of the cover 12.

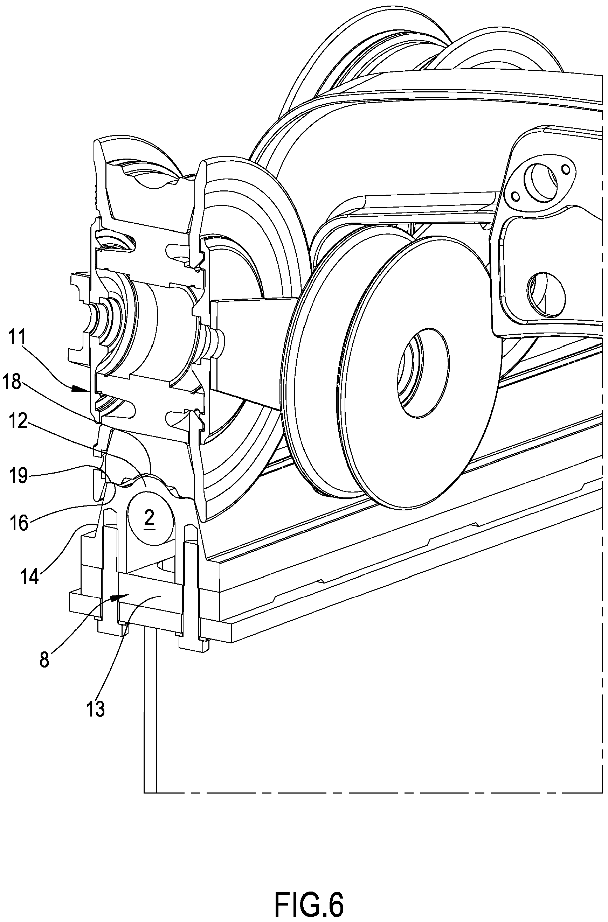

Also during transit over the closed section 9 of the seat 7, the rollers 11 weigh only on the upper faces 16 of the sides 14 of the seat 7 and not on the cover 12, as shown in Figure 6.

For example, in order to achieve this effect, the cover 12 of the seat 7 has a greater height than the upper faces 16 of the sides 14 for a length less than the depth of the central track 18 with respect to the two side tracks 19 for the rolling of the rollers 11.

The result is a simple operation of the shoe according to the present invention.

During movement of the transportation unit of the system imparted by the traction cable, the trolley's rollers roll along the upper face of the carrying cable.

At the entrance to the shoe, the carrying cable is initially guided, however the central track of the rollers is always in contact with it.

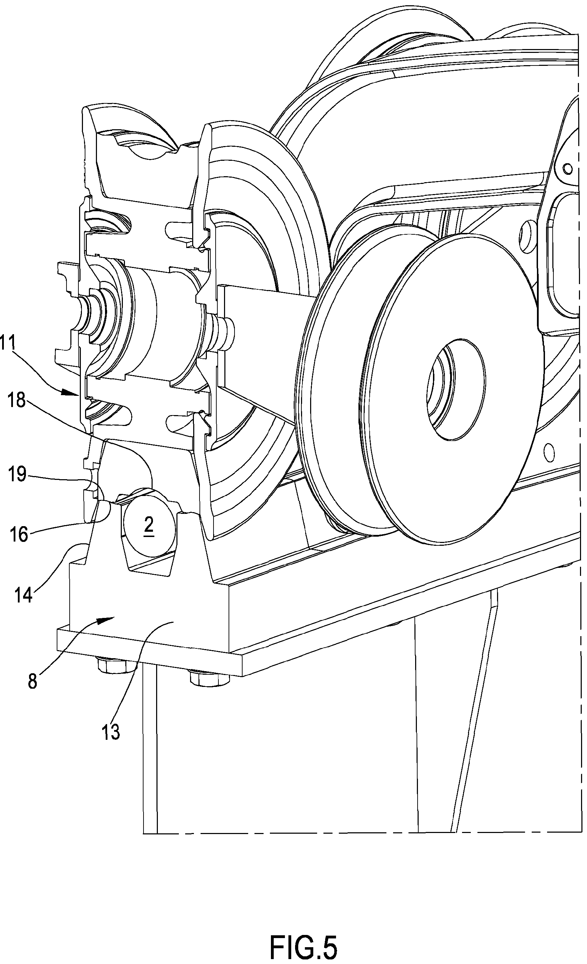

Once the rollers have reached the seat formed on the upper end of the shoe, the cable settles in a position relative to the sides of the seat such that the trolley can no longer weigh on it but proceeds by rolling along the side tracks abutting the upper surfaces of the sides of the seat (Figure 5).

In this first section of movement on the seat of the shoe, the cable is exposed above and, although not in contact with them, faces the rollers.

The seat thus provides a second section which however has a cover that forms a sort of tunnel passage for the carrying cable while the rollers of the trolley continue to roll along the upper surfaces of the sides of the seat. In the second section, where the rollers continue to roll along the upper surfaces of the sides of the seat, the upper surface of the cover replaces, broadly speaking, the upper surface of the carrying cable which has been temporarily deflected under the cover. Just as there is no contact between the rollers and the carrying cable along the first section of the seat, there is similarly no contact between the rollers and the cover in the second section (Figure 6).

Downstream of the closed section there is a further open section of the seat in which the cable is again in the open and faces, although it is not in contact with, the rollers which still roll along the upper surfaces of the sides of the seat.

Once this section of the seat is completed, the rollers can continue rolling on the carrying cable and moving beyond the shoe towards the next upstream or downstream station or towards the next shoe.

Because the transitions between the various open and closed sections of the seat are always carried out with constant maintenance of the local radius of the shoe, there is no discomfort in the transportation unit due to local coverage of the seat of the shoe which, in the event of a crosswind, keeps the carrying cable securely in place.

It is evident that the shoe for a cable transportation system with at least one carrying cable and one traction cable described herein may be subject to modifications and variations without departing from the scope of protection of the appended claims.

## Claims

1. Shoe (1) for a cable transportation system (3) with at least one carrying cable (2), the shoe (1) comprising a seat (7) delimited below by a base (13) and laterally by opposite sides (14) for housing at least a portion of the carrying cable (2); and a cover (12) closing above at least a section (9) of the seat (7) so as to form a closed section (9); wherein at least the base (13) of the closed section (9) has holes (17).

2. Shoe as claimed in claim 1, wherein the seat (7) comprises at least one open section (8) upstream with respect to the section (9) closed by the cover (12).

3. Shoe as claimed in claim 2, wherein the radius of curvature of the shoe remains unchanged at the transition between the open section (8) and the closed section (9).

4. Shoe as claimed in claim 3, wherein the opposite sides (14) have upper faces (16) that have the same shape and height as the base (13) at the transition between the open section (8) and the closed section (9).

5. Shoe as claimed in claim 4, wherein the base (13) of the closed section (9) is integral with the base (13) of the open section (8) ; the sides (16) and the cover (12) of the closed section (9) being integral and selectively removable from the base (13).

6. Shoe as claimed in any one of the foregoing claims, wherein there is a gap (21) between the carrying cable (2) and the inner surface of the cover (12).

7. Shoe as claimed in any one of the foregoing claims, wherein the carrying cable (2) is free to move inside the seat (7).

8. Shoe as claimed in any one of the foregoing claims 2-7, wherein the seat (7) of the shoe (1) comprises an open section (8) downstream of the closed section (9) and configured similarly to the open section (8) arranged upstream of the closed section (9).

9. Cable transportation system (3) with at least one carrying cable (2), the system (3) comprising:
at least one carrying cable (2);
a shoe (1) comprising a seat (7) delimited below by a base (13) and laterally by opposite sides (14) for housing at least a portion of the carrying cable (2); and
at least one cover (12) closing above at least a section (9) of the seat (7) so as to form a closed section (9);
wherein at least the base (13) of the closed section (9) has holes (17).

10. Cable transportation system as claimed in claim 9, wherein the seat (7) of the shoe (1) comprises at least one open section (8) upstream with respect to the section (9) closed by the cover (12).

11. Cable transportation system as claimed in claim 10, wherein the radius of curvature of the shoe remains unchanged at the transition between the open section (8) and the closed section (9).

12. Cable transportation system as claimed in claim 11, wherein the seat (7) is delimited below by a base (13) and laterally by opposite sides (14), that have upper faces (16) that have the same shape and height with respect to the base (13) at the transition between the open section (8) and the closed section (9).

13. Cable transportation system as claimed in claim 12 comprising at least one trolley (20) provided with rollers (11) for rolling on the carrying cable (2) associated with at least one transportation unit (10); each roller (11) comprising a central track (18) for rolling on the carrying cable (2) and two side tracks (19) for rolling on the upper faces (16), wherein the carrying cable (2) in the open section (8) and the cover (12) in the closed section (9) of the seat (7) project with respect to the upper faces (16) for a length shorter than the depth between the central track (18) and the side tracks (19).

14. Cable transportation system as claimed in claim 9, wherein the base (13) of the closed section (9) is integral with the base (13) of the open section (8); the sides (16) and the cover (12) of the closed section (9) being integral and selectively removable from the base (13).

15. Cable transportation system as claimed in any one of the foregoing claims 9-14, wherein there is a gap (21) between the carrying cable (2) and the inner surface of the cover (12).

16. Cable transportation system as claimed in any one of the foregoing claims 9-15, wherein the carrying cable (2) is free to move inside the seat (7).

17. Cable transportation system as claimed in any one of the foregoing claims 10-16, wherein the seat (7) of the shoe (1) comprises an open section (8) downstream with respect to the closed section (9) and configured such that the open section (8) is arranged upstream with respect to the closed section (9).

## Patentansprüche

1. Schuh (1) für ein Seiltransportsystem (3) mit mindestens einem Tragseil (2), wobei der Schuh (1) einen Sitz (7) umfasst, der unten von einer Grundplatte (13) und seitlich von gegenüberliegenden Seiten (14) begrenzt ist, um mindestens einen Abschnitt des Tragseils (2) aufzunehmen; und eine Abdeckung (12), die oben mindestens ein Teilstück (9) des Sitzes (7) schließt, um ein geschlossenes Teilstück (9) zu bilden; wobei mindestens die Grundplatte (13) des geschlossenen Teilstücks (9) Löcher (17) aufweist.

2. Schuh nach Anspruch 1, wobei der Sitz (7) mindestens ein offenes Teilstück (8) stromaufwärts in Bezug auf das Teilstück (9), das durch die Abdeckung (12) geschlossen ist, umfasst.

3. Schuh nach Anspruch 2, wobei der Krümmungsradius des Schuhs an dem Übergang zwischen dem offenen Teilstück (8) und dem geschlossenen Teilstück (9) unverändert bleibt.

4. Schuh nach Anspruch 3, wobei die gegenüberliegenden Seiten (14) obere Flächen (16) aufweisen, die die gleiche Form und Höhe aufweisen wie die Grundplatte (13) an dem Übergang zwischen dem offenen Teilstück (8) und dem geschlossenen Teilstück (9).

5. Schuh nach Anspruch 4, wobei die Grundplatte (13) des geschlossenen Teilstücks (9) einstückig mit der Grundplatte (13) des offenen Teilstücks (8) gebildet ist; wobei die Seiten (16) und die Abdeckung (12) des geschlossenen Teilstücks (9) einstückig und selektiv abnehmbar von der Grundplatte (13) gebildet sind.

6. Schuh nach einem der vorhergehenden Ansprüche, wobei es einen Spalt (21) gibt zwischen dem Tragseil (2) und der inneren Oberfläche der Abdeckung (12).

7. Schuh nach einem der vorhergehenden Ansprüche, wobei das Tragseil (2) innerhalb des Sitzes (7) frei beweglich ist.

8. Schuh nach einem der vorhergehenden Ansprüche 2 bis 7, wobei der Sitz (7) des Schuhs (1) ein offenes Teilstück (8) umfasst, das stromabwärts von dem geschlossenen Teilstück (9) liegt und ähnlich dem offenen Teilstück (8) ausgestaltet ist, das stromaufwärts von dem geschlossenen Teilstück (9) angeordnet ist.

9. Seiltransportsystem (3) mit mindestens einem Tragseil (2), wobei das System (3) umfasst:
mindestens ein Tragseil (2);
einen Schuh (1), der einen Sitz (7) umfasst, der unten von einer Grundplatte (13) und seitlich von gegenüberliegenden Seiten (14) begrenzt ist, um mindestens einen Abschnitt des Tragseils (2) aufzunehmen; und
mindestens eine Abdeckung (12), die oben mindestens ein Teilstück (9) des Sitzes (7) schließt, um ein geschlossenes Teilstück (9) zu bilden;
wobei mindestens die Grundplatte (13) des geschlossenen Teilstücks (9) Löcher (17) aufweist.

10. Seiltransportsystem nach Anspruch 9, wobei der Sitz (7) des Schuhs (1) mindestens ein offenes Teilstück (8) stromaufwärts in Bezug auf das Teilstück (9), das durch die Abdeckung (12) geschlossen ist, umfasst.

11. Seiltransportsystem nach Anspruch 10, wobei der Krümmungsradius des Schuhs an dem Übergang zwischen dem offenen Teilstück (8) und dem geschlossenen Teilstück (9) unverändert bleibt.

12. Seiltransportsystem nach Anspruch 11, wobei der Sitz (7) unten von einer Grundplatte (13) und seitlich von gegenüberliegenden Seiten (14) begrenzt ist, die obere Flächen (16) aufweisen, die die gleiche Form und Höhe in Bezug auf die Grundplatte (13) an dem Übergang zwischen dem offenen Teilstück (8) und dem geschlossenen Teilstück (9) aufweisen.

13. Seiltransportsystem nach Anspruch 12, umfassend mindestens ein Laufwerk (20), das mit Rollen (11) versehen ist, um auf dem Tragseil (2) in Verbindung mit mindestens einer Transporteinheit (10) zu rollen; wobei jede Rolle (11) eine Mittelspur (18) zum Rollen auf dem Tragseil (2) und zwei Seitenspuren (19) zum Rollen auf den oberen Flächen (16) umfasst, wobei das Tragseil (2) in dem offenen Teilstück (8) und die Abdeckung (12) in dem geschlossenen Teilstück (9) des Sitzes (7) in Bezug auf die oberen Flächen (16) um eine Länge vorspringt, die kürzer ist als die Tiefe zwischen der Mittelspur (18) und den Seitenspuren (19).

14. Seiltransportsystem nach Anspruch 9, wobei die Grundplatte (13) des geschlossenen Teilstücks (9) einstückig mit der Grundplatte (13) des offenen Teilstücks (8) gebildet ist; wobei die Seiten (16) und die Abdeckung (12) des geschlossenen Teilstücks (9) einstückig und selektiv abnehmbar von der Grundplatte (13) gebildet sind.

15. Seiltransportsystem nach einem der vorhergehenden Ansprüche 9 bis 14, wobei es einen Spalt (21) gibt zwischen dem Tragseil (2) und der inneren Oberfläche der Abdeckung (12).

16. Seiltransportsystem nach einem der vorhergehenden Ansprüche 9 bis 15, wobei das Tragseil (2) innerhalb des Sitzes (7) frei beweglich ist.

17. Seiltransportsystem nach einem der vorhergehenden Ansprüche 10 bis 16, wobei der Sitz (7) des Schuhs (1) ein offenes Teilstück (8) umfasst, das stromabwärts in Bezug auf das geschlossene Teilstück (9) liegt und so ausgestaltet ist, dass das offene Teilstück (8) stromaufwärts in Bezug auf das geschlossene Teilstück (9) angeordnet ist.

## Revendications

1. Sabot (1) pour un système de transport par câble (3) avec au moins un câble porteur (2), le sabot (1) comprenant un siège (7) délimité en dessous par une base (13) et latéralement par des côtés opposés (14) pour loger au moins une partie du câble porteur (2) ; et un capot (12) se fermant au-dessus d'au moins une section (9) du siège (7) de manière à former une section fermée (9) ; dans lequel au moins la base (13) de la section fermée (9) présente des trous (17).

2. Sabot selon la revendication 1, dans lequel le siège (7) comprend au moins une section ouverte (8) en amont par rapport à la section (9) fermée par le capot (12).

3. Sabot selon la revendication 2, dans lequel le rayon de courbure du sabot reste inchangé à la transition entre la section ouverte (8) et la section fermée (9).

4. Sabot selon la revendication 3, dans lequel les côtés opposés (14) ont des faces supérieures (16) qui ont la même forme et la même hauteur que la base (13) à la transition entre la section ouverte (8) et la section fermée (9).

5. Sabot selon la revendication 4, dans lequel la base (13) de la section fermée (9) est solidaire de la base (13) de la section ouverte (8) ; les côtés (16) et le capot (12) de la section fermée (9) étant solidaires de la base (13) et pouvant être retirés sélectivement de la base (13).

6. Sabot selon l'une quelconque des revendications précédentes, dans lequel il existe un espace (21) entre le câble porteur (2) et la surface intérieure du capot (12).

7. Sabot selon l'une quelconque des revendications précédentes, dans lequel le câble porteur (2) est libre de se déplacer à l'intérieur du siège (7).

8. Sabot selon l'une quelconque des revendications précédentes 2-7, dans lequel le siège (7) du sabot (1) comprend une section ouverte (8) en aval de la section fermée (9) et configurée de manière similaire à la section ouverte (8) disposée en amont de la section fermée (9).

9. Système de transport par câble (3) avec au moins un câble porteur (2), le système (3) comprenant :
au moins un câble porteur (2) ;
un sabot (1) comprenant un siège (7) délimité en dessous par une base (13) et latéralement par des côtés opposés (14) pour loger au moins une partie du câble porteur (2) ; et
au moins un capot (12) se fermant au-dessus d'au moins une section (9) du siège (7) de manière à former une section fermée (9) ;
dans lequel au moins la base (13) de la section fermée (9) présente des trous (17).

10. Système de transport par câble selon la revendication 9, dans lequel le siège (7) du sabot (1) comprend au moins une section ouverte (8) en amont par rapport à la section (9) fermée par le capot (12).

11. Système de transport par câble selon la revendication 10, dans lequel le rayon de courbure du sabot reste inchangé à la transition entre la section ouverte (8) et la section fermée (9).

12. Système de transport par câble selon la revendication 11, dans lequel le siège (7) est délimité en dessous par une base (13) et latéralement par des côtés opposés (14), qui ont des faces supérieures (16) qui ont la même forme et la même hauteur par rapport à la base (13) à la transition entre la section ouverte (8) et la section fermée (9).

13. Système de transport par câble selon la revendication 12, comprenant au moins un chariot (20) muni de galets (11) pour rouler sur le câble porteur (2) associé à au moins une unité de transport (10) ; chaque galet (11) comprenant une voie centrale (18) pour rouler sur le câble porteur (2) et deux voies latérales (19) pour rouler sur les faces supérieures (16), dans lequel le câble porteur (2) dans la section ouverte (8) et le capot (12) dans la section fermée (9) du siège (7) font saillie par rapport aux faces supérieures (16) sur une longueur inférieure à la profondeur entre la voie centrale (18) et les voies latérales (19).

14. Système de transport par câble selon la revendication 9, dans lequel la base (13) de la section fermée (9) est solidaire de la base (13) de la section ouverte (8) ; les faces latérales (16) et le capot (12) de la section fermée (9) étant solidaires et pouvant être retirés sélectivement de la base (13).

15. Système de transport par câble selon l'une quelconque des revendications 9 à 14 ci-dessus, dans lequel il existe un espace (21) entre le câble porteur (2) et la surface intérieure du capot (12).

16. Système de transport par câble selon l'une quelconque des revendications précédentes 9 à 15, dans lequel le câble porteur (2) est libre de se déplacer à l'intérieur du siège (7).

17. Système de transport par câble selon l'une quelconque des revendications précédentes 10 à 16, dans lequel le siège (7) du sabot (1) comprend une section ouverte (8) en aval par rapport à la section fermée (9) et configurée de telle sorte que la section ouverte (8) est disposée en amont par rapport à la section fermée (9).
